(19) **Europäisches Patentamt / European Patent Office / Office européen des brevets**

(11) **EP 2 690 020 B1**

(12) **FASCICULE DE BREVET EUROPEEN**

(45) Date de publication et mention de la délivrance du brevet:
**08.01.2020 Bulletin 2020/02**

(51) Int Cl.:
*B64G 1/24* *(2006.01)*    *B64G 1/26* *(2006.01)*
*B64G 1/28* *(2006.01)*    *B64G 1/36* *(2006.01)*
*B64G 1/00* *(2006.01)*    *B64G 1/40* *(2006.01)*

(21) Numéro de dépôt: **13175810.4**

(22) Date de dépôt: **09.07.2013**

(54) **Procédé de réduction du moment cinétique et de contrôle d' attitude d' un engin spatial**

Verfahren zur Reduzierung des Drehimpulses und zur Fluglageregelung eines Raumfahrzeugs

Method for reducing the angular momentum and controlling the attitude of a spacecraft

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.07.2012 FR 1202130**

(43) Date de publication de la demande:
**29.01.2014 Bulletin 2014/05**

(73) Titulaire: **Thales**
**92400 Courbevoie (FR)**

(72) Inventeurs:
• **Caullier, François**
**31100 Toulouse (FR)**
• **Delhay, Faustine**
**31100 Toulouse (FR)**
• **Lacambre, Jean-Marc**
**31100 TOULOUSE (FR)**
• **Brouillard, Etienne**
**31100 Toulouse (FR)**

(74) Mandataire: **Collet, Alain**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 0 788 045**    **EP-A1- 1 428 754**
**EP-A2- 0 795 806**    **EP-A2- 1 024 082**
**US-A- 3 997 137**    **US-A- 6 032 903**
**US-A1- 2008 035 797**

**Description**

La présente invention porte sur le domaine des systèmes de commande d'attitude et d'orbite (SCAO) pour un engin spatial. Plus particulièrement, elle porte sur un procédé de réduction de moment cinétique d'un satellite qui peut être mis en œuvre après une phase de séparation du satellite avec un lanceur ou bien pendant un mode survie.

Un système de commande d'attitude et d'orbite est un ensemble d'équipements et de logiciels de bord qui assure le pilotage d'un engin spatial pour lui imposer l'attitude voulue et ajuster son orbite aux exigences de la mission. Dans le cas d'un satellite géostationnaire de télécommunications, on cherche par exemple à orienter le satellite de manière constante par rapport à la terre pour permettre le fonctionnement de divers instruments de mission. Pour ce faire, un système SCAO comprend généralement divers capteurs pour définir l'attitude et la position du satellite, des actionneurs tels que des dispositifs de propulsion et des dispositifs d'accumulation de moment cinétique pour modifier la position et l'attitude, et un logiciel de vol qui assure l'orientation et le maintien de l'orbite du satellite dans les différentes phases de vie du satellite.

Lors de la séparation du satellite et du lanceur, ou lorsque celui bascule dans un mode survie suite à une défaillance d'un équipement, le satellite présente une attitude et un moment cinétique non maitrisés. La phase initiale, qui consiste à stabiliser l'attitude du satellite, en réduisant son moment cinétique, et à l'orienter dans une direction recherchée, par exemple vers le soleil, est une phase critique du contrôle d'attitude. Pour simplifier les exigences envers les actionneurs du système de contrôle d'attitude, et ouvrir la voie vers de nouvelles architectures de satellites, en particulier pour le dispositif de propulsion, un nouveau procédé de réduction du moment cinétique est proposé par la présente invention. Selon un autre aspect de l'invention, le procédé permet avantageusement de réduire l'impact sur l'orbite de l'opération de réduction de moment cinétique.

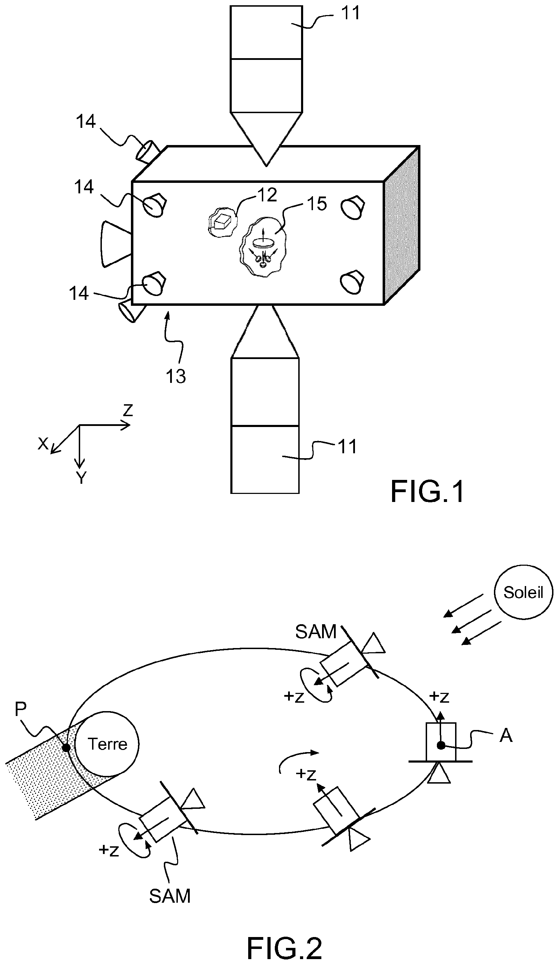

Un satellite d'architecture courante est généralement constitué d'un sous-ensemble d'équipements et de logiciels dits de mission, tels que des systèmes de télécommunications ou d'observations, et d'un sous-ensemble dit de service qui regroupe les équipements et logiciels nécessaires au bon fonctionnement du satellite, de la séparation avec le lanceur à la fin de vie du satellite. La figure 1 représente des équipements de service dans une architecture courante d'un satellite à orbite terrestre. Des générateurs solaires 11 sont fixés à la structure du satellite pour permettre l'alimentation en énergie du satellite pendant toute la vie du satellite. Un système de commande d'attitude et d'orbite SCAO fait aussi partie des équipements de service. Un système SCAO comprend en particulier un ensemble de capteurs 12, un dispositif de propulsion 13 comprenant un ou plusieurs propulseurs 14, et un dispositif d'accumulation de moment cinétique 15.

L'ensemble de capteurs 12, qui a pour rôle de définir l'attitude et la position du satellite, comprend par exemple des capteurs terre, capteurs soleil ou capteurs stellaire. D'autres capteurs permettent de mesurer des variations de position ou d'attitude (gyromètres, accéléromètres). L'ensemble de capteurs 12 délivre une estimation de la position et de l'attitude du satellite dans les trois directions de l'espace.

Le dispositif de propulsion 13 comprend en général plusieurs propulseurs 14 fixés en divers emplacements sur la structure du satellite. En délivrant une poussée en direction du centre de masse du satellite, le dispositif de propulsion permet de corriger la trajectoire et modifier la position du satellite sur son orbite. En appliquant une force en dehors du centre de masse, il permet aussi de créer un couple et donc de modifier l'attitude du satellite. Un premier type de propulseur, dit propulseur chimique, consomme un carburant chimique de type ergol ou propergol. Il permet de délivrer une poussée de forte puissance mais présente une consommation relativement élevée qui implique d'embarquer une masse de carburant pénalisante. Dans un second type de propulseur, dit propulseur à plasma, ou propulseur électrique, des atomes de xénon sont ionisés par collision avec des électrons. La poussée est générée lorsque les ions xénons chargés sont accélérés hors du propulseur par un champ électromagnétique. Bien que coûteux et de masse initiale importante, l'efficacité du propulseur est sensiblement plus importante que celle des propulseurs chimiques.

Le dispositif de propulsion 13 est utilisé à la fois pour le transfert de l'orbite de lancement vers l'orbite de mission, pour le maintien à poste sur l'orbite de mission, et pour le contrôle d'attitude du satellite. Pour cela, un satellite d'architecture courante comprend généralement plusieurs propulseurs permettant de contrôler position et attitude selon trois axes du satellite. Pour réduire les coûts et augmenter la capacité d'emport de charge utile d'un satellite, on cherche à limiter le nombre de propulseurs montés sur le satellite et à réduire la quantité de carburant nécessaire. L'utilisation de propulseurs électriques, qui nécessite un réservoir de carburant moins lourd et moins volumineux, est un premier axe d'optimisation. On connaît aussi des systèmes de propulsion comprenant des moyens mécaniques permettant de déplacer l'axe de poussée du propulseur dans le but de limiter le nombre de propulseurs nécessaires.

Un système SCAO s'appuie aussi sur un dispositif d'accumulation de moment cinétique 15, comme par exemple un ensemble de roues à réaction, de roues à inertie ou d'actionneurs gyroscopiques. Un moteur électrique entraine une roue inertielle en rotation selon un axe du satellite, une variation de la vitesse de rotation générant un couple qui par réaction entraine en rotation le satellite autour de son centre de masse. Un dispositif d'accumulation de moment cinétique 15 comprenant par exemple trois roues à réaction (ou quatre roues pour la redondance) permet de stabiliser et de contrôler l'attitude selon les trois axes du satellite.

En pratique, le fonctionnement du dispositif d'accumulation de moment cinétique 15 et du dispositif de propulsion 13 est fortement lié. En appliquant une poussée légèrement en dehors du centre de masse, on peut à la fois commander une modification de trajectoire du satellite et créer un couple permettant par exemple de désaturer les roues à réaction en conservant l'attitude du satellite. Le logiciel du système SCAO comprend ainsi des algorithmes qui centralisent les mesures des capteurs 12 et contrôlent la position et l'attitude du satellite en pilotant le dispositif de propulsion 13 et le dispositif d'accumulation de moment cinétique 15 dans les différentes phases de vie du satellite.

Une utilisation de propulseurs chimiques et de dispositifs d'accumulation de moment cinétique pour la réduction de la nutation d'un engin spatiale est par exemple décrite dans le document US 3,997,137.

La figure 2 décrit le principe de mise en orbite géostationnaire d'un satellite. Un engin spatial lanceur transporte le satellite jusqu'à une orbite terrestre basse. Au périgée P de l'orbite, le satellite est séparé et éjecté de la coiffe du lanceur au moyen d'un dispositif par exemple mécanique à ressort. La mise en orbite de mission comprend ensuite plusieurs étapes. Dans une première étape, dite SAM pour l'acronyme anglo-saxon *Sun Acquisition Mode,* le satellite qui présente des vitesses de rotation initiales non maitrisées, doit être stabilisé. Son orientation est ensuite maintenue constante par rapport au soleil, les générateurs solaires sont partiellement déployés pour permettre l'alimentation électrique du satellite. A l'approche de l'apogée A de l'orbite, le satellite est réorienté de manière à permettre au dispositif de propulsion de délivrer une poussée tangentielle à l'orbite. Cette accélération à proximité de l'apogée, qui peut être répétée sur plusieurs révolutions, permet de réduire l'excentricité de l'orbite jusqu'à l'orbite géostationnaire recherchée. L'étape initiale après séparation du lanceur, qui consiste à stabiliser l'attitude à partir d'une situation initiale non maitrisée vers une orientation cible, est une phase critique gérée par des algorithmes dédiés du système SCAO.

Cette situation est aussi rencontrée lorsque le satellite bascule dans un mode survie suite à une défaillance d'un équipement. Ces mêmes algorithmes sont alors mis en œuvre pour stabiliser l'attitude et orienter le satellite par rapport au soleil jusqu'à ce qu'une solution de résolution de défaillance soit déterminée.

Dans les systèmes connus aujourd'hui déployés, on pilote le dispositif de propulsion de manière à générer un couple opposé à la rotation du satellite. On sollicite les différents propulseurs de manière à ralentir la rotation successivement sur les trois axes ; cette opération étant en général répétée plusieurs fois jusqu'à réduire les vitesses de rotation selon chaque axe jusqu'à des valeurs proches de zéro. Après stabilisation, le dispositif d'accumulation de moment cinétique est piloté de manière à orienter le satellite dans la direction voulue.

Cette approche souffre pourtant de limites que la présente invention cherche à résoudre. En particulier, le satellite doit être équipé de nombreux propulseurs. Un satellite géostationnaire d'architecture courante comprend typiquement entre dix et quinze propulseurs pour assurer le contrôle d'attitude et d'orbite. Les propulseurs électriques, plus lourds et plus chers, ne peuvent être retenus pour l'ensemble du système de propulsion ; des propulseurs chimiques restent nécessaires, au détriment de la masse de carburant nécessaire.

La réduction du moment cinétique est obtenue par la poussée délivrée par un propulseur. En plus du couple, la poussée entraine un déplacement du centre de masse, autrement dit un incrément de vitesse du satellite. L'incrément de vitesse pendant la phase de réduction du moment cinétique est une autre limite des systèmes connus. En particulier, dans le cas du lancement de plusieurs satellites par un même engin lanceur, les satellites se trouvant après séparation très proches les uns des autres, tout incrément de vitesse présente un risque de collision. De la même manière, une correction d'orbite est nécessaire après un départ en mode survie si l'incrément de vitesse est trop important.

L'invention vise à proposer une solution alternative pour la réduction du moment cinétique d'un engin spatial et permettre le contrôle de son attitude en palliant les difficultés des solutions existantes précédemment décrites.

A cet effet, l'invention a pour objet un procédé de réduction de moment cinétique pour un engin spatial, ledit engin spatial comprenant :

- un dispositif de propulsion apte à générer un couple modulable en amplitude selon un axe Z ; ledit axe Z correspondant sensiblement à un axe de plus grande inertie ou de plus faible inertie de l'engin spatial ; deux axes X et Y formant avec Z un repère orthogonal direct lié à l'engin spatial,
- un dispositif d'accumulation de moment cinétique, apte à générer et contrôler, par pilotage des vitesses de rotation de roues inertielles du dispositif d'accumulation de moment cinétique, un moment cinétique et un couple selon les axes X, Y et Z,
- un ensemble de capteurs apte à mesurer des vitesses de rotation de l'engin spatial selon les axes X, Y et Z, et à délivrer une estimation du moment cinétique de l'engin spatial.

Le procédé comporte :

- une première étape d'alignement du moment cinétique de l'engin spatial sur l'axe Z, consistant à asservir le moment cinétique respectivement selon l'axe X et l'axe Y, du dispositif d'accumulation de moment cinétique, sur la vitesse de rotation de l'engin spatial, respectivement selon l'axe Y et l'axe X, créant des couples gyroscopiques qui tendent à réduire les vitesses de rotation de l'engin spatial selon les axes X et Y,

Selon l'invention le procédé comprend une seconde étape de réduction du moment cinétique de l'engin spatial au moyen d'un couple d'axe Z généré par le dispositif de propulsion.

Avantageusement, l'étape d'alignement comporte :

- une étape de calcul de consignes de moment cinétique $H_x$, $H_y$ et $H_z$ du dispositif d'accumulation de moment cinétique respectivement selon les axes X, Y et Z, en fonction de vitesses de rotation ($\omega_x$, $\omega_y$ et $\omega_z$ de l'engin spatial respectivement selon les axes X, Y et Z, au moyen des relations suivantes lorsque $\omega_z$ est positif:

$$H_x = K\ \omega_y$$

$$H_y = -\ K\ \omega_x$$

$$H_z = 0$$

dans laquelle K est un coefficient prédéfini ; les mêmes relations étant mises en œuvre lorsque $\omega_z$ est négatif en remplaçant le coefficient K par un coefficient K' ; ledit coefficient K' étant déterminée par la relation K' = - K,

- une étape de pilotage des vitesses de rotation des roues inertielles de manière à asservir le moment cinétique des roues inertielles généré selon chacun des axes sur les valeurs de consignes $H_x$, $H_y$ et $H_z$ déterminées dans l'étape précédente ;

l'étape d'alignement étant poursuivie tant que les vitesses de rotation de l'engin spatial selon les deux axes X et Y sont supérieures à un seuil prédéfini.

L'invention porte aussi sur un système de contrôle d'attitude et d'orbite comprenant un module de pilotage hébergeant des instructions de code permettant de mettre en œuvre un procédé ayant les caractéristiques précédemment décrites.

L'invention porte également sur un satellite à orbite terrestre muni d'un système de contrôle d'attitude et d'orbite ayant les caractéristiques précédemment décrites.

L'invention sera mieux comprise et d'autres avantages apparaîtront à la lecture de la description détaillée des modes de réalisation donnés à titre d'exemple sur les figures suivantes.

La figure 1, déjà présentée, représente des équipements de service dans une architecture courante d'un satellite à orbite terrestre,

la figure 2, déjà présentée, décrit le principe de mise en orbite géostationnaire d'un satellite,

les figures 3a et 3b représentent des trajectoires de vitesses de rotation d'un engin spatial mises en œuvre dans une première étape dite d'alignement du moment cinétique de l'engin spatial,

les figures 4a, 4b et 4c illustrent le principe d'une seconde étape dite de réduction du moment cinétique d'un engin spatial,

la figure 5 illustre sous la forme d'un organigramme un mode de réalisation du procédé selon l'invention,

la figure 6 illustre sous la forme d'un organigramme un exemple de mise en œuvre du procédé dans un système de contrôle d'attitude et d'orbite d'un engin spatial.

Par souci de clarté, les mêmes éléments porteront les mêmes repères dans les différentes figures.

Le procédé décrit par la présente invention vise en premier lieu une application à un système de contrôle d'attitude et d'orbite pour un satellite. Il est particulièrement adapté pour répondre à la nécessité de maitriser l'attitude d'un satellite après une phase de séparation avec un engin lanceur, ou lors du basculement du satellite dans un mode survie. Toutefois cette mise en œuvre n'est pas limitative, et le procédé peut s'appliquer selon le même principe et avec les mêmes avantages plus généralement à tout type d'engin spatial pour lequel on cherche à réduire le moment cinétique à partir d'une situation initiale non maitrisée.

Le procédé peut être mis en œuvre sur un engin spatial comprenant :

- un dispositif de propulsion 13, apte à générer un couple modulable en amplitude selon un axe Z ; ledit axe Z correspondant sensiblement à un axe de plus grande inertie ou de plus faible inertie de l'engin spatial ; deux axes X et Y formant avec Z un repère orthogonal direct lié à l'engin spatial,
- un dispositif d'accumulation de moment cinétique 15, apte à générer et contrôler, par pilotage des vitesses de rotation de roues inertielles du dispositif d'accumulation de moment cinétique, un moment cinétique et un couple selon les axes X, Y et Z,
- un ensemble de capteurs 12, apte à mesurer des vitesses de rotation ($\omega_x$, $\omega_y$, $\omega_z$) de l'engin spatial selon les axes X, Y et Z, et à délivrer une estimation du moment cinétique (h) de l'engin spatial.

Le procédé selon l'invention consiste dans une première étape à aligner le moment cinétique selon un axe au moyen du dispositif d'accumulation de moment cinétique 15, avant de réduire ce moment cinétique dans une seconde étape au moyen du dispositif de propulsion 13 en générant un couple opposé selon cet axe. Comme nous allons le décrire dans la suite, l'alignement du moment cinétique peut être obtenu selon le procédé pour l'axe de plus grande inertie ou pour l'axe de plus faible inertie de l'engin spatial ; l'axe d'inertie intermédiaire ne permettant pas d'assurer la convergence du procédé. Ainsi, selon l'architecture de l'engin spatial, et en particulier selon la définition du dispositif de propulsion 13 de l'engin spatial, l'axe Z choisi pour l'alignement du moment cinétique correspond sensiblement à l'axe de plus grande inertie ou à l'axe de plus faible inertie de l'engin spatial.

Après séparation du lanceur ou lors d'un basculement en mode survie, l'engin spatial est animé de vitesses initiales non maitrisées. En l'absence de perturbations extérieures, et sans action des roues inertielles, la conservation du moment cinétique peut s'exprimer selon la relation :

$$\frac{\omega_x^2}{h^2/I_x^2} + \frac{\omega_y^2}{h^2/I_y^2} + \frac{\omega_z^2}{h^2/I_z^2} = 1 \qquad (1)$$

dans laquelle $\omega_x$, $\omega_y$ et $\omega_z$ sont les vitesses de rotation de l'engin spatial selon les trois axes, h est le moment cinétique de l'engin spatial, et $I_x$, $I_y$ et $I_z$ sont les composantes de la matrice d'inertie supposée diagonale de l'engin spatial.

La conservation de l'énergie cinétique peut s'exprimer selon la relation :

$$\frac{\omega_x^2}{2T/I_x} + \frac{\omega_y^2}{2T/I_y} + \frac{\omega_z^2}{2T/I_z} = 1 \qquad (2)$$

dans laquelle T est l'énergie cinétique de l'engin spatial.

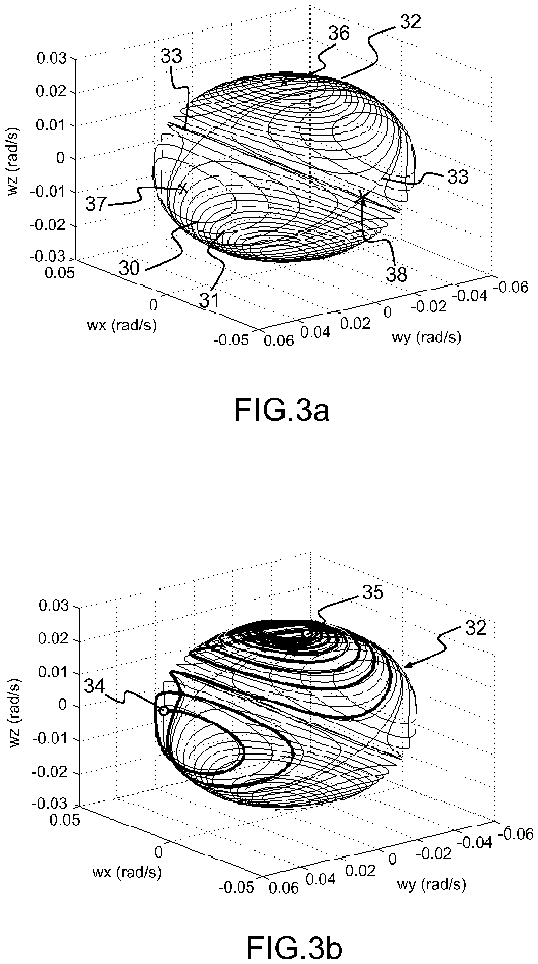

Les équations (1) et (2) sont des équations d'éllipsoïdes. La trajectoire suivie par les vitesses de rotation de l'engin spatial correspond donc à l'intersection des deux éllipsoïdes. Une telle trajectoire 30 représentée sur la figure 3a est un polhode.

Lorsqu'on sollicite les roues inertielles du dispositif d'accumulation de moment cinétique 15, il y a variation de l'énergie cinétique de l'engin spatial (action électrique du moteur de la roue). En l'absence de perturbations extérieures, le moment cinétique de l'engin spatial est conservé. En modifiant la vitesse de rotation des roues inertielles, on obtient un autre polhode 31. La figure 3a représente ainsi une série de polhode accessibles par action sur les roues inertielles, le moment cinétique de l'engin spatial étant constant, égal au moment cinétique initial $h_{ini}$, par exemple transmis au moment de la séparation du lanceur. La série de polhode est contenue dans la surface de l'éllipsoïde 32 de moment cinétique constant $h_{ini}$. Notons aussi trois points particuliers sur l'éllipsoïde 32 :

- Un point 36, dit « flat spin », correspondant à des vitesses de rotation uniquement autour de l'axe de plus grande inertie (l'axe Z dans l'exemple de la figure 3a),
- Un point 37, dit « normal spin », correspondant à des vitesses de rotation uniquement autour de l'axe de plus faible inertie (l'axe Y dans l'exemple de la figure 3a),
- Un point 38, correspondant à l'intersection de deux polhodes de transition 33 ; le point 38 correspondant à des vitesses de rotation uniquement autour du troisième axe d'inertie (l'axe X dans l'exemple de la figure 3a).

Le « flat spin » et le « normal spin » sont des points d'équilibre. Un engin spatial disposant d'un moment cinétique proche de l'un de ces points parcourt une polhode courte, les vitesses de rotation varient peu. Comme cela est décrit par la suite, le procédé selon l'invention permet de converger vers l'un de ces deux points d'équilibre .

En revanche, le point 38 de rotation autour de l'axe d'inertie intermédiaire n'est pas une position d'équilibre. Un engin spatial disposant de vitesses de rotation initiales uniquement autour de l'axe X suit un polhode de transition 33 et donc s'éloigne naturellement du point de fonctionnement 38. La rotation de l'engin spatial autour de l'axe d'inertie intermédiaire n'est pas stable.

Le principe du procédé selon l'invention consiste dans une première étape, dite étape d'alignement du moment cinétique, à modifier l'énergie cinétique par action sur les roues inertielles du dispositif d'accumulation de moment cinétique 15 pour passer d'un polhode à l'autre en cherchant à converger vers un polhode caractérisé par une vitesse de rotation concentrée sur un seul axe.

En l'absence de perturbations extérieures, le dispositif de propulsion 13 n'étant pas sollicité, les équations d'Euler appliquées à l'engin spatial s'écrivent :

$$I_x \dot{w}_x + w_y w_z (I_z - I_y) + w_y H_z - w_z H_y + \dot{H}_x = 0$$
$$I_u \dot{w}_y + w_z w_x (I_x - I_z) + w_z H_x - w_x H_z + \dot{H}_y = 0 \qquad (3)$$
$$I_z \dot{w}_z + w_x w_y (I_y - I_x) + w_x H_y - w_y H_x + \dot{H}_z = 0$$

dans lesquelles $\omega_x$, $\omega_y$ et $\omega_z$ sont les vitesses de rotation de l'engin spatial selon les trois axes, $H_x$, $H_y$ et $H_z$ sont les composantes du moment cinétique du dispositif d'accumulation de moment cinétique 15 selon les trois axes, et $I_x$, $I_y$ et $I_z$ sont les composantes de la matrice d'inertie supposée diagonale de l'engin spatial.

Dans le but d'aligner le moment cinétique de l'engin spatial sur l'axe Z, le procédé pilote le moment cinétique du dispositif d'accumulation de moment cinétique, respectivement selon l'axe X et l'axe Y, en fonction de la vitesse de rotation de l'engin spatial, respectivement selon l'axe Y et l'axe X.

Dans le cas où $\omega_z$ est positif, le procédé détermine des consignes de moment cinétique du dispositif d'accumulation de moment cinétique par les relations suivantes :

$$H_x = K w_y$$
$$H_y = -K w_x \qquad (4)$$
$$H_z = 0$$

dans lesquelles $\omega_x$ et $\omega_y$ sont les vitesses de rotation de l'engin spatial selon les axes X et Y, $H_x$ et $H_y$ sont les composantes du moment cinétique du dispositif d'accumulation de moment cinétique selon les axes X et Y, et K est un coefficient constant prédéfini.

Dans le cas où $\omega_z$ est négatif, le procédé définit un coefficient K' = - K appliqué au calcul des consignes de moment cinétique $H_x$ et $H_y$ selon les relations (4).

En substituant $H_x$, $H_y$ et $H_z$ par ces consignes dans les équations d'Euler (3), on obtient :

$$\left( I_x + \frac{K^2}{I_y} \right) \dot{w}_x = \left( I_y - I_z + \frac{K^2}{I_y} \right) w_y w_z + K \left( \frac{I_x - I_y - I_z}{I_y} \right) w_x w_z$$
$$\left( I_y + \frac{K^2}{I_x} \right) \dot{w}_y = \left( I_z - I_x - \frac{K^2}{I_x} \right) w_x w_z + K \left( \frac{-I_x + I_y - I_z}{I_x} \right) w_y w_z \qquad (5)$$
$$I_z \dot{w}_z = \left( I_x - I_y \right) w_x w_y + K \left( w_x^2 + w_y^2 \right)$$

Les équations (5) représentent la trajectoire suivie par les vitesses de rotation de l'engin spatial dont le dispositif d'accumulation de moment cinétique est piloté au moyen de consignes déterminées par les équations (4). La figure 3b représente en trait fort un exemple de trajectoire sur l'éllipsoïde 32 de moment cinétique constant $h_{ini}$. Dans cet exemple, l'engin spatial est animé, dans une situation initiale représentée par le point 34, d'une vitesse de rotation essentiellement selon l'axe Y ($\omega_y$ très supérieur à $\omega_x$ et $\omega_z$). Par action sur le dispositif d'accumulation de moment cinétique 15, la trajectoire est lentement déviée du polhode d'énergie cinétique constante. Le calcul des consignes de moment cinétique selon les équations (4) permet avantageusement d'orienter progressivement la vitesse de rotation de l'engin spatial vers l'axe de plus grande inertie.

Partant d'une situation initiale où l'engin spatial est en rotation essentiellement selon l'axe Y, le procédé permet d'orienter la rotation de l'engin spatial essentiellement selon l'axe Z. Au point 35 de la figure 3b, le procédé considère que l'étape d'alignement est terminée, les vitesses de rotation $\omega_x$ et $\omega_y$ de l'engin spatial étant suffisamment faibles. Dans le cas où Z est l'axe de plus grande inertie, l'engin spatial est dans une situation couramment appelée par l'expression anglo-saxonne « flat spin ». Dans le cas où Z est l'axe de plus faible inertie, l'engin spatial est dans une situation couramment appelée par l'expression anglo-saxonne « normal spin ».

En résumé, le procédé comprend une première étape d'alignement du moment cinétique de l'engin spatial sur l'axe Z, consistant à asservir le moment cinétique respectivement selon l'axe X et l'axe Y, du dispositif d'accumulation de moment cinétique 15, sur la vitesse de rotation de l'engin spatial, respectivement selon l'axe Y et l'axe X, créant des couples gyroscopiques qui tendent à réduire les vitesses de rotation de l'engin spatial selon les axes X et Y.

Avantageusement, l'étape d'alignement comporte :

- une étape de calcul de consignes de moment cinétique $H_x$, $H_y$ et $H_z$ du dispositif d'accumulation de moment cinétique 15 respectivement selon les axes X, Y et Z, en fonction de vitesses de rotation $\omega_x$, $\omega_y$ et $\omega_z$ de l'engin spatial respectivement selon les axes X, Y et Z, au moyen des relations suivantes lorsque $\omega_z$ est positif :

$$H_x = K \, \omega_y$$

$$H_y = - K \, \omega_x$$

$$H_z = 0$$

dans laquelle K est un coefficient prédéfini ; les mêmes relations étant mises en œuvre lorsque $\omega_z$ est négatif en remplaçant le coefficient K par un coefficient K' ; ledit coefficient K' étant déterminée par la relation K' = - K,
- une étape de pilotage des vitesses de rotation des roues inertielles de manière à asservir le moment cinétique des roues inertielles généré selon chacun des axes sur les valeurs de consignes $H_x$, $H_y$ et $H_z$ déterminées dans l'étape précédente ;

l'étape d'alignement étant poursuivie tant que les vitesses de rotation de l'engin spatial selon les deux axes X et Y sont supérieures à un seuil prédéfini.

La convergence de cette étape d'alignement du moment cinétique dépend de la valeur du coefficient K, de la valeur du moment cinétique initial $h_{ini}$ et de paramètres intrinsèques de l'engin spatial, comme notamment la matrice d'inertie de l'engin spatial et du dispositif d'accumulation de moment cinétique 15.

Dans un mode de réalisation préféré de l'invention, le procédé détermine dans une étape préliminaire le coefficient K en fonction de conditions initiales de l'engin spatial définies au lancement du procédé de réduction de moment cinétique, par exemple après séparation du lanceur ou lros de l'entrée en mode survie.

Notons aussi que selon le procédé, le coefficient K ainsi déterminé est appliqué pour le calcul des consignes selon les relations (4) dans le cas où $\omega_z$ est positif. Dans le cas où $\omega_z$ est négatif, on définit un coefficient K' = - K que l'on applique pour le calcul des consignes de moment cinétique Hx et Hy des roues inertielles selon les relations (4).

Pour montrer que le procédé de calcul des consignes de moment cinétique $H_x$ et $H_y$ au moyen des relations (4) assure la convergence vers l'alignement du moment cinétique selon l'axe Z, considérons par exemple un satellite de télécommunications muni d'un dispositif d'accumulation de moment cinétique 15 constitué de trois roues à réactions d'axes respectifs X, Y et Z. L'énergie cinétique T de l'engin spatial s'écrit alors :

$$2T = I_x w_x^2 + I_y w_y^2 + I_z w_z^2 + I_s w_1^2 + I_s w_2^2 \qquad (6)$$

dans laquelle $I_s$ est l'inertie des roues à réactions, $\omega_1$ et $\omega_2$ sont les vitesses de rotation des roues à réactions selon les axes X et Y.

Le calcul des consignes de moment cinétique conduit à :

$$\begin{aligned} I_s w_1 &= K w_y \\ I_s w_2 &= -K w_x \end{aligned} \qquad (7)$$

Par substitution de ces consignes, la relation (6) devient :

$$2T = \left( I_x + \frac{K^2}{I_s} \right) w_x^2 + \left( I_y + \frac{K^2}{I_s} \right) w_y^2 + I_z w_z^2 \qquad (8)$$

Par dérivation, cette équation s'écrit :

$$\dot{T} = \left( I_x + \frac{K^2}{I_s} \right) w_x \dot{w}_x + \left( I_y + \frac{K^2}{I_s} \right) w_y \dot{w}_y + I_z w_z \dot{w}_z \qquad (9)$$

En substituant les variations de vitesses de rotation au moyen des équations d'Euler (5), la variation d'énergie cinétique peut s'exprimer par la relation :

$$\dot{T} = 2 J_{xy} w_x w_y w_z + J_x w_x^2 w_z + J_y w_y^2 w_z \qquad (10)$$

dans laquelle $J_x$, $J_y$ et $J_{xy}$ sont des constantes égales à :

$$J_x = \frac{I_x + \dfrac{K^2}{I_s}}{I_x + \dfrac{K^2}{I_y}} K \left( \frac{I_x - I_y - I_z}{I_y} \right) + K$$

$$J_y = \frac{I_y + \dfrac{K^2}{I_s}}{I_y + \dfrac{K^2}{I_x}} K \left( \frac{-I_x + I_y - I_z}{I_x} \right) + K \qquad (11)$$

$$J_{xy} = \frac{1}{2} \left[ \frac{I_x + \dfrac{K^2}{I_s}}{I_x + \dfrac{K^2}{I_y}} \left( I_y - I_z + \frac{K^2}{I_y} \right) + \frac{I_y + \dfrac{K^2}{I_s}}{I_y + \dfrac{K^2}{I_x}} \left( I_z - I_x - \frac{K^2}{I_x} \right) + I_x - I_y \right]$$

La relation (10) est équivalente à la relation :

$$\dot{T} = \begin{pmatrix} w_x & w_y \end{pmatrix} A \begin{pmatrix} w_x \\ w_y \end{pmatrix} w_z \qquad (12)$$

dans laquelle A est la matrice :

$$A = \begin{bmatrix} J_x & J_{xy} \\ J_{xy} & J_y \end{bmatrix} \qquad (13)$$

Dans l'exemple choisi d'un satellite de télécommunications, les valeurs suivantes :
$I_x = 500$ ; $I_y = 400$ ; $I_z = 800$ ; $I_s = 0.03$ ; $K = 120$ ;
déterminent des valeurs propres de la matrice A de $-2.49.10^5$ et $-1.8085.10^5$. Ces valeurs propres négatives impliquent que la variation de l'énergie cinétique, exprimée par la relation (12) est négative, l'énergie cinétique du satellite décroit. Le point de convergence est atteint pour $\omega_x = \omega_y = 0$.

En résumé, le procédé de calcul des consignes de moment cinétique au moyen des relations (4) réduit l'énergie cinétique du satellite, en assurant la convergence vers des vitesses de rotation nulles selon les axes X et Y, c'est-à-dire dans ce cas vers le « flat spin ».

Notons aussi que le procédé permet aussi de maitriser le sens de la rotation obtenue à l'issue de l'étape d'alignement. La trajectoire représentée sur la figure 3b converge vers une vitesse de rotation positive autour de l'axe Z (« pôle Nord » de l'ellipsoïde). Pour cela la trajectoire franchit la courbe 33, dite polhode de transition, avec une vitesse de rotation positive (franchissement de la courbe 33 dans « l'hémisphère Nord » de l'éllipsoïde). Si en raison de la définition du dispositif de propulsion 13, on souhaite amener l'engin spatial vers une rotation autour de l'axe Z de signe opposé (« pôle Sud » de l'ellipsoïde) le procédé peut être configuré pour interrompre l'action des roues inertielles avant le franchissement de la courbe 33. La trajectoire suit alors le polhode d'énergie cinétique constante. Sur ce polhode, le procédé décide de réactiver l'action des roues inertielles lorsque la trajectoire atteint une vitesse de rotation négative, la trajectoire franchit alors la courbe 33 dans « l'hémisphère Sud » de l'éllipsoïde et converge vers une vitesse de rotation négative autour de l'axe Z. Cette caractéristique du procédé est particulièrement intéressante car elle permet d'assurer la réduction du moment cinétique dans le cas d'un engin spatial disposant d'un dispositif de propulsion apte à générer un couple d'axe Z selon un seul sens. La réduction du moment cinétique par le procédé selon l'invention ne nécessite ainsi qu'un seul propulseur, configuré pour délivrer un couple selon l'axe de plus grande inertie ou selon l'axe de plus faible inertie.

Avantageusement, l'étape d'alignement comporte ainsi une étape consistant à suspendre l'asservissement du moment cinétique du dispositif d'accumulation de moment cinétique 15 lorsque $\omega_z$ est positif ou lorsque $\omega_z$ est négatif ; permettant de garantir une direction du couple d'axe Z nécessaire à l'étape de réduction du moment cinétique de l'engin spatial.

Notons par ailleurs que l'axe Z est défini ci-dessus comme correspondant sensiblement à un axe de plus grande inertie ou de plus faible inertie de l'engin spatial. En pratique, les axes naturels de l'engin spatial tels que représentés sur la figure 1 peuvent ne pas être strictement alignés sur les axes d'inertie de l'engin spatial. Autrement dit, la matrice d'inertie de l'engin spatial exprimé dans un repère de référence de l'engin spatial n'est pas strictement diagonale, des termes faibles non nulles peuvent exister en dehors de la diagonale. Le procédé permet de converger vers un axe sensiblement aligné sur l'axe de plus grande ou plus faible inertie, par exemple comme illustré par le point 35 sur la figure 3b. Dans ces conditions, le dispositif d'accumulation de moment cinétique 15 conserve un moment cinétique après convergence du procédé, de manière à ce que le moment cinétique de l'ensemble engin spatial et dispositif d'accumulation de moment cinétique 15 corresponde au « flat spin ». Ainsi, on considère un axe comme sensiblement aligné sur l'axe de plus grande ou plus faible inertie dès lors que la capacité du dispositif d'accumulation de moment cinétique 15 est supérieur au moment cinétique résultant après convergence du procédé (la différence entre le « flat spin » et une rotation autour d'un axe naturel pouvant s'exprimer par un écart de moment cinétique).

Après l'étape d'alignement du moment cinétique selon l'axe Z, le procédé selon l'invention comporte une seconde étape de réduction du moment cinétique de l'engin spatial au moyen d'un couple d'axe Z généré par le dispositif de propulsion 13.

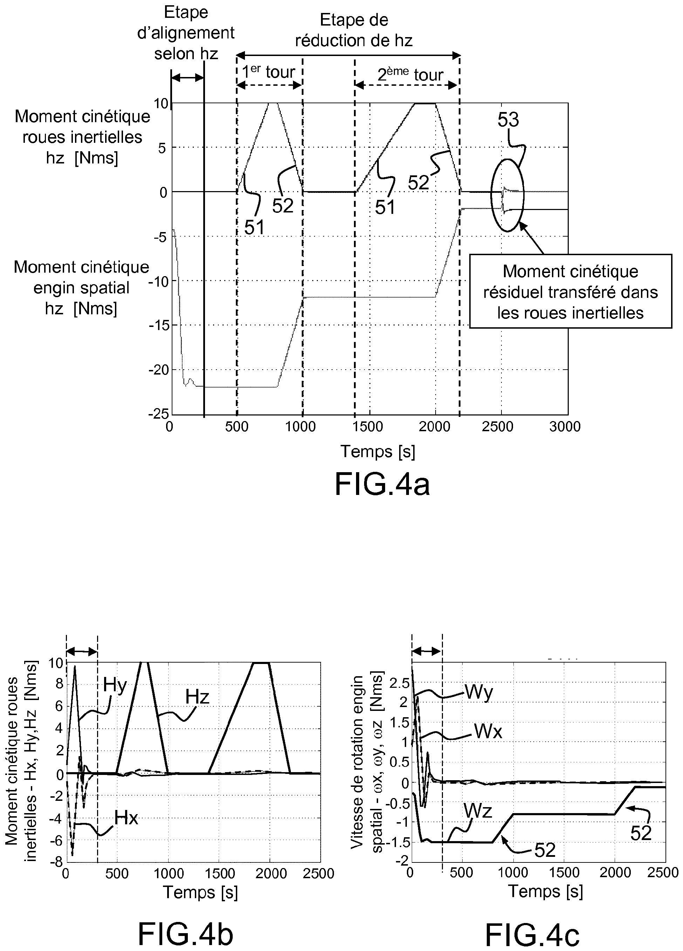

Dans un premier mode de réalisation de l'invention, cette étape consiste à piloter le dispositif de propulsion de manière à générer un couple opposé à la rotation de l'engin spatial jusqu'à une vitesse de rotation inférieure à un seuil prédéfini. Les figures 4a, 4b et 4c décrivent le principe d'un second mode de réalisation de cette étape permettant avantageusement de limiter les incréments de vitesses de l'engin spatial liés à l'utilisation du dispositif de propulsion 13.

La figure 4a représente une évolution des moments cinétiques selon Z du dispositif d'accumulation de moment cinétique (en partie supérieure) et de l'engin spatial (en partie inférieure) permettant selon le procédé d'annuler le moment cinétique de l'engin spatial. Pour cela, le procédé comprend une étape d'alignement, de 0 à 300 secondes, une étape de réduction de moment cinétique, de 500 à 2200 secondes, et une étape finale, à 2500 secondes, consistant à transférer le moment cinétique résiduel de l'engin spatial vers le dispositif d'accumulation. Les figures 4b et 4c représentent pour ces étapes l'évolution des moments cinétiques $H_x$, $H_y$ et $H_z$ du dispositif d'accumulation de moment cinétique (figure 4b), et des vitesses de rotation $\omega_x$, $\omega_y$ et $\omega_z$ de l'engin spatial (figure 4c).

Comme précédemment décrit, l'étape d'alignement permet par le pilotage des moments cinétiques $H_x$ et $H_y$ des roues inertielles de créer des couples gyroscopiques qui tendent à réduire les vitesses de rotation $\omega_x$ et $\omega_y$ de l'engin spatial. A l'issue de cette étape, le moment cinétique de l'engin spatial est aligné sur l'axe Z ($h_z$ = -22 Nms ; $\omega_z$ = -15 deg/s, $\omega_x$ = $\omega_y$ = 0). L'étape de réduction de moment cinétique comporte :

-   une étape d'accumulation 51 de moment cinétique $H_z$ des roues inertielles, de 500 à 700 secondes environ, obtenue au moyen d'une poussée délivrée par le dispositif de propulsion. Pendant cette étape, le couple généré par la poussée est absorbé par le dispositif d'accumulation de moment cinétique. La vitesse de rotation de l'engin spatial est maintenue constante. L'étape est interrompue pour une valeur de moment cinétique $H_z$ égale à 10 Nms, capacité maximale des roues inertielles.
-   une étape de restitution 52 de moment cinétique. Le moment cinétique Hz des roues inertielles est progressivement réduit en créant un couple qui s'oppose à la rotation de l'engin spatial selon l'axe Z. Le moment cinétique $h_z$ et la vitesse de rotation $\omega_z$ décroient.

Le moment cinétique de l'engin spatial étant encore élevé ($h_z$ = - 12 Nms) les deux étapes 51 et 52 sont répétés une seconde fois, de 1400 à 2200 secondes environ ; les roues inertielles sont saturées en $H_z$, ce moment cinétique est ensuite transféré à l'engin spatial pour ralentir sa vitesse de rotation $\omega_z$. A l'issue de cette étape, le moment cinétique $h_z$ de l'engin spatial étant suffisamment faible ($h_z$ = -3 Nms), l'étape de réduction de moment cinétique est interrompue. Le procédé comporte ensuite une étape 53 consistant à annuler le moment cinétique de l'engin spatial au moyen du dispositif d'accumulation de moment cinétique.

La mise en œuvre d'un tel procédé, scindé entre une étape 51 d'accumulation de moment cinétique à vitesse de rotation constante et une étape 52 de réduction du moment cinétique sans perturbations extérieures est particulièrement avantageuse car elle permet de limiter l'impact du procédé sur l'orbite. En pilotant la poussée du propulseur sur une ou plusieurs révolutions de l'engin spatial, il devient possible de compenser les incréments de vitesses non désirables inhérents à la poussée. On peut comme c'est le cas sur les figures 4a, 4b et 4c, appliquer une poussée constante pendant une révolution complète de l'engin spatial. On peut aussi définir une séquence de plusieurs poussées appliquées sur une plusieurs révolutions de l'engin spatial. Le procédé selon l'invention permet donc une grande flexibilité pour l'étape de réduction du moment cinétique, permettant de s'adapter à diverses contraintes de conception ou d'utilisation, comme par exemple une capacité maximale, en moment cinétique ou en couple, du dispositif d'accumulation de moment cinétique 15, un rapport cyclique d'ouverture minimal ou maximal du dispositif de propulsion 13, une autonomie batterie, ou une exigence d'incrément de vitesse maximal de l'engin spatial sur son orbite.

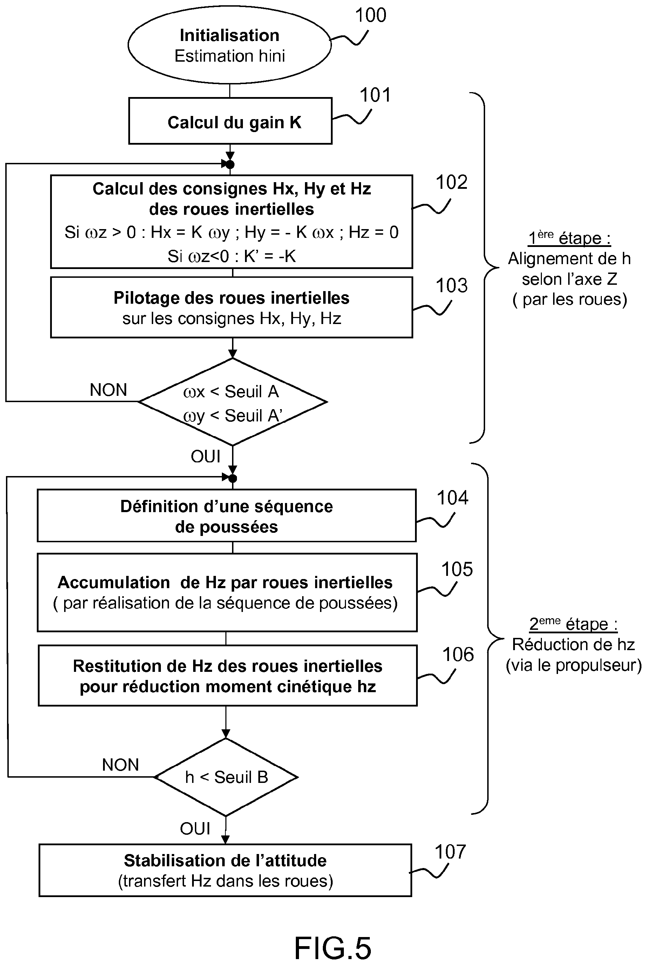

La figure 5 illustre sous la forme d'un organigramme un mode de réalisation du procédé selon l'invention. Il comporte les étapes suivantes :

- une étape 100 d'initialisation, assurant notamment l'acquisition des mesures des vitesses de rotation $\omega_x$ et $\omega_y$ et du moment cinétique initial $h_{ini}$ de l'engin spatial,
- une étape 101 de calcul du coefficient K, en fonction de conditions initiales de l'engin spatial définies au lancement du procédé de réduction de moment cinétique,
- une étape 102 de calcul de consignes de moment cinétique $H_x$, $H_y$ et $H_z$ du dispositif d'accumulation de moment cinétique 15 selon les axes X, Y et Z, en fonction du coefficient K et des vitesses de rotation $\omega_x$ et $\omega_y$ de l'engin spatial selon les axes X et Y,
- une étape 103 de pilotage des vitesses de rotation des roues inertielles de manière à asservir le moment cinétique des roues inertielles généré selon chacun des axes sur les valeurs de consignes $H_x$, $H_y$ et $H_z$ déterminées dans l'étape précédente ;
  les étapes successives 102 et 103 étant poursuivies tant que les vitesses de rotation $\omega_x$ et $\omega_y$ de l'engin spatial selon les deux axes X et Y sont supérieures à un seuil prédéfini,
- une étape 104 de définition d'une séquence de poussées délivrées par le dispositif de propulsion 13,
- une étape 105 d'accumulation de moment cinétique selon l'axe Z par le dispositif d'accumulation de moment cinétique 15, résultant de la séquence de poussées ; le couple d'axe Z généré par la séquence de poussée, de signe opposé à la vitesse de rotation de l'engin spatial selon l'axe Z, étant absorbée par le dispositif d'accumulation de moment cinétique de manière à maintenir une vitesse de rotation constante de l'engin spatial selon l'axe Z ; cette étape réalisée à vitesse de rotation constante permettant de limiter des incréments de vitesses non voulus inhérents aux poussées délivrées par le dispositif de propulsion 13. Les étapes 102 et 103 restent actives pendant cette phase pour maintenir la rotation du satellite autour de l'axe Z.
- une étape 106 de restitution de moment cinétique, consistant à réduire le moment cinétique de l'engin spatial par transfert du moment cinétique accumulé par le dispositif d'accumulation de moment cinétique 15 vers l'engin spatial, les étapes successives 104, 105 et 106 étant interrompues lorsque la norme du moment cinétique de l'engin spatial selon est inférieure à un seuil prédéfini.
- une étape 107 de stabilisation de l'attitude de l'engin spatial, consistant à annuler le moment cinétique de l'engin spatial au moyen du dispositif d'accumulation de moment cinétique 15 lorsque le moment cinétique de l'engin spatial est inférieur à un seuil prédéfini.

Ce mode de réalisation représenté sur la figure 5 n'est pas limitatif du procédé selon l'invention. Selon la définition de l'engin spatial et du lanceur, selon le besoin opérationnel pour les différentes phases utilisant ledit procédé, certaines étapes décrites ci-dessus peuvent ne pas être mises en œuvre, d'autres étapes pourront aussi être ajoutées.

Comme on l'a vu il peut être en particulier avantageux de prévoir une étape supplémentaire consistant à suspendre le pilotage des vitesses de rotation des roues inertielles lorsque $\omega_z$ est positif ou lorsque $\omega_z$ est négatif dans le but de maitriser le sens de rotation de l'engin spatial à l'issue de l'étape d'alignement ; permettant de garantir une direction du couple nécessaire à l'étape de réduction du moment cinétique de l'engin spatial.

Par ailleurs, la séquence de poussées définie dans l'étape 104 peut avantageusement comprendre plusieurs poussées délivrées successivement au cours d'une ou plusieurs révolutions de l'engin spatial autour de l'axe Z ; la séquence de poussées étant configurée de manière à compenser les incréments de vitesse inhérents à chacune des poussées.

Aussi, l'étape 105 d'accumulation de moment cinétique est avantageusement interrompue lorsque le moment cinétique selon l'axe Z du dispositif d'accumulation de moment cinétique atteint une valeur maximale prédéfinie; les étapes successives d'accumulation et de restitution de moment cinétique étant répétées plusieurs fois, jusqu'à ce que le moment cinétique de l'engin spatial selon l'axe Z soit inférieur à un seuil prédéfini.

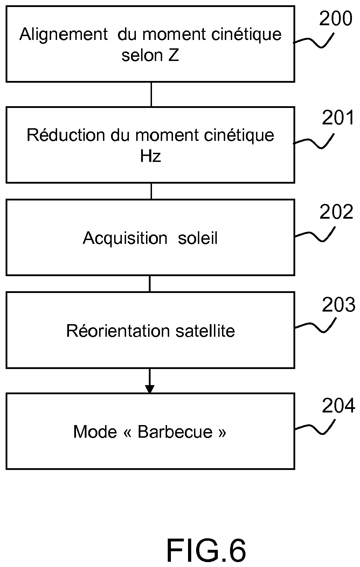

La figure 6 illustre sous la forme d'un organigramme un exemple de mise en œuvre du procédé dans un système de contrôle d'attitude et d'orbite SCAO d'un engin spatial. Le procédé comporte des étapes d'alignement 200 et de réduction 201 du moment cinétique de l'engin spatial, telles que précédemment décrites. A l'issue de l'étape 201, l'attitude de l'engin spatial étant stabilisée, le procédé comporte une étape 202 consistant à détecter le position du soleil au moyen de l'ensemble de capteurs, par exemple en réalisant une rotation de 360° selon un axe quelconque, et une étape 203 consistant à orienter l'engin spatial par rapport au soleil au moyen du dispositif d'accumulation de moment cinétique ou bien à l'aide des propulseurs. Dans une étape 204, l'engin satellite bascule dans un mode généralement appelé mode barbecue, consistant à maintenir une orientation constante de l'engin spatial par rapport au soleil en assurant la recharge des batteries.

En asservissant le moment cinétique des roues inertielles de manière croisée sur les vitesses de rotation de l'engin spatial sur deux axes perpendiculaires, le procédé décrit par la présente invention assure une convergence rapide vers un axe de plus grande ou de plus faible inertie. L'orientation du moment cinétique sur un axe, la possibilité de choisir un axe flat spin ou normal spin, et la possibilité de maitriser le sens de rotation de convergence, offre une flexibilité nouvelle et large pour la conception du dispositif de propulsion de l'engin spatial. Le procédé est donc particulièrement adapté pour une application à un satellite équipé uniquement de propulseurs électriques. La réduction du moment cinétique ramené à un seul axe, réalisé en deux temps, tout d'abord par accumulation dans les roues puis par transfert vers le satellite, permet de maitriser l'orbite pendant cette phase critique de stabilisation d'atttitude. On garantit un incrément de vitesse limité, compatible des lancements multi-satellite.

L'invention porte aussi sur un système de contrôle d'attitude et d'orbite comprenant un module de pilotage hébergeant des instructions de code permettant de mettre en œuvre le procédé ayant les caractéristiques précédemment décrites.

L'invention porte également sur un satellite à orbite terrestre muni d'un système de contrôle d'attitude et d'orbite ayant les caractéristiques précédemment décrites.

## Revendications

**1.** Procédé de réduction de moment cinétique pour un engin spatial, ledit engin spatial comprenant :

- un dispositif de propulsion (13) apte à générer un couple modulable en amplitude selon un axe Z ; ledit axe Z correspondant sensiblement à un axe de plus grande inertie ou de plus faible inertie de l'engin spatial ; deux axes X et Y formant avec Z un repère orthogonal direct lié à l'engin spatial,
- un dispositif d'accumulation de moment cinétique (15), apte à générer et contrôler, par pilotage des vitesses de rotation de roues inertielles du dispositif d'accumulation de moment cinétique, un moment cinétique et un couple selon les axes X, Y et Z,
- un ensemble de capteurs (12) apte à mesurer des vitesses de rotation ($\omega_x$, $\omega_y$, $\omega_z$) de l'engin spatial selon les axes X, Y et Z, et à délivrer une estimation du moment cinétique (h) de l'engin spatial,

le procédé comportant :

- une première étape d'alignement du moment cinétique de l'engin spatial sur l'axe Z, consistant à asservir le moment cinétique respectivement selon l'axe X et l'axe Y, du dispositif d'accumulation de moment cinétique (15), sur la vitesse de rotation de l'engin spatial, respectivement selon l'axe Y et l'axe X, créant des couples gyroscopiques qui tendent à réduire les vitesses de rotation de l'engin spatial selon les axes X et Y,

**caractérisé en ce que** le procédé comporte en outre :

- une seconde étape de réduction du moment cinétique de l'engin spatial au moyen d'un couple d'axe Z généré par le dispositif de propulsion (13).

**2.** Procédé selon la revendication 1, **caractérisé en ce que** l'étape d'alignement comporte :

- une étape de calcul de consignes de moment cinétique $H_x$, $H_y$ et $H_z$ du dispositif d'accumulation de moment cinétique (15) respectivement selon les axes X, Y et Z, en fonction de vitesses de rotation ($\omega_x$, $\omega_y$ et $\omega_z$ de

l'engin spatial respectivement selon les axes X, Y et Z, au moyen des relations suivantes lorsque $\omega_z$ est positif:

$$H_x = K \ \omega_y$$

$$H_y = - \ K \ \omega_x$$

$$H_z = 0$$

dans laquelle K est un coefficient prédéfini ; les mêmes relations étant mises en œuvre lorsque $\omega_z$ est négatif en remplaçant le coefficient K par un coefficient K' ; ledit coefficient K' étant déterminée par la relation K' = - K,
- une étape de pilotage des vitesses de rotation des roues inertielles de manière à asservir le moment cinétique des roues inertielles généré selon chacun des axes sur les valeurs de consignes $H_x$, $H_y$ et $H_z$ déterminées dans l'étape précédente ;

l'étape d'alignement étant poursuivie tant que les vitesses de rotation de l'engin spatial selon les deux axes X et Y sont supérieures à un seuil prédéfini.

3. Procédé selon la revendication 2, **caractérisé en ce que** le coefficient K est déterminé en fonction de conditions initiales de l'engin spatial définies au lancement dudit procédé.

4. Procédé selon les revendications 2 ou 3, **caractérisé en ce que** l'étape d'alignement comporte une étape consistant à suspendre l'asservissement du moment cinétique du dispositif d'accumulation de moment cinétique (15) lorsque $\omega_z$ est positif ou lorsque $\omega_z$ est négatif ; permettant de garantir une direction du couple d'axe Z nécessaire à l'étape de réduction du moment cinétique de l'engin spatial.

5. Procédé selon l'une des revendications précédentes, **caractérisé en ce que** l'étape de réduction du moment cinétique comporte des étapes successives :

- d'accumulation de moment cinétique selon l'axe Z par le dispositif d'accumulation de moment cinétique (15), résultant d'une séquence de poussées délivrées par le dispositif de propulsion (13) ; le couple d'axe Z généré par la séquence de poussée, de signe opposé à la vitesse de rotation de l'engin spatial selon l'axe Z, étant absorbée par le dispositif d'accumulation de moment cinétique (15) de manière à maintenir une vitesse de rotation ($\omega_z$) constante de l'engin spatial selon l'axe Z,
- de restitution de moment cinétique, consistant à réduire le moment cinétique de l'engin spatial par transfert du moment cinétique accumulé par le dispositif d'accumulation de moment cinétique (15) vers l'engin spatial. l'étape d'accumulation de moment cinétique réalisée pour une vitesse de rotation constante de l'engin spatial permettant de limiter des incréments de vitesses non voulus inhérents aux poussées délivrées par le dispositif de propulsion (13).

6. Procédé selon la revendication 5, **caractérisé en ce que** la séquence de poussées comprend plusieurs poussées délivrées successivement au cours d'une ou plusieurs révolutions de l'engin spatial autour de l'axe Z ; la séquence de poussées étant configurée de manière à compenser les incréments de vitesse inhérents à chacune des poussées.

7. Procédé selon les revendications 6 ou 7, **caractérisé en ce que** l'étape d'accumulation de moment cinétique est interrompue lorsque le moment cinétique selon l'axe Z du dispositif d'accumulation de moment cinétique (15) atteint une valeur maximale prédéfinie; les étapes successives d'accumulation et de restitution de moment cinétique étant répétées plusieurs fois, jusqu'à ce que le moment cinétique de l'engin spatial selon l'axe Z soit inférieur à un seuil prédéfini.

8. Procédé selon l'une des revendications précédentes, **caractérisé en ce que** l'étape de réduction du moment cinétique est interrompue lorsque le moment cinétique de l'engin spatial selon l'axe Z est inférieur à un seuil prédéfini.

9. Procédé selon l'une des revendications précédentes, **caractérisé en ce qu'**il comporte une étape consistant à annuler le moment cinétique de l'engin spatial au moyen du dispositif d'accumulation de moment cinétique (15)

lorsque le moment cinétique de l'engin spatial est inférieur à un seuil prédéfini.

10. Procédé selon l'une des revendications précédentes, **caractérisé en ce qu'**il comporte une étape consistant à détecter le position du soleil au moyen de l'ensemble de capteurs (12), et à orienter l'engin spatial par rapport au soleil au moyen du dispositif d'accumulation de moment cinétique (15).

11. Système de contrôle d'attitude et d'orbite comprenant un module de pilotage hébergeant des instructions de code permettant de mettre en oeuvre le procédé selon l'une des revendications 1 à 10.

12. Satellite à orbite terrestre muni d'un système de contrôle d'attitude et d'orbite selon la revendication 11.

**Patentansprüche**

1. Verfahren zur Reduzierung des Drehimpulses eines Raumfahrzeugs, wobei das Raumfahrzeug Folgendes beinhaltet:

   - eine Antriebsvorrichtung (13), welche in der Lage ist, ein in der Amplitude entlang einer Achse Z modulierbares Drehmoment zu erzeugen; wobei die Achse Z im Wesentlichen einer Achse mit größerer Trägheit oder geringerer Trägheit des Raumfahrzeugs entspricht; wobei zwei Achsen X und Y mit Z ein mit dem Raumfahrzeug verbundenes direktes Koordinatensystem bilden,
   - eine Vorrichtung zum Speichern des Drehimpulses (15), welche in der Lage ist, durch Steuerung der Drehgeschwindigkeiten von Trägheitsrädern der Drehimpuls-Speichervorrichtung einen Drehimpuls und ein Drehmoment entlang den Achsen X, Y und Z zu erzeugen und zu steuern,
   - eine Gruppe von Sensoren (12), welche in der Lage ist, Drehgeschwindigkeiten ($\omega_x$, $\omega_y$, $\omega_z$) des Raumfahrzeugs entlang den Achsen X, Y und Z zu messen und eine Schätzung des Drehimpulses (h) des Raumfahrzeugs abzugeben,

   wobei das Verfahren Folgendes beinhaltet:

   - einen ersten Schritt des Ausfluchtens des Drehimpulses des Raumfahrzeugs auf die Achse Z, welcher darin besteht, den Drehimpuls jeweils entlang der Achse X und entlang der Achse Y der Drehimpuls-Speichervorrichtung (15) regelungstechnisch an die Drehgeschwindigkeit des Raumfahrzeugs, jeweils entlang der Achse Y und der Achse X, anzubinden, wodurch Kreiselmomente erzeugt werden, die dazu tendieren, die Drehgeschwindigkeiten des Raumfahrzeugs entlang den Achsen X und Y zu reduzieren,

   **dadurch gekennzeichnet, dass** das Verfahren zudem Folgendes beinhaltet:

   - einen zweiten Schritt des Reduzierens des Drehimpulses des Raumfahrzeugs mithilfe eines Momentes der Achse Z, welches durch die Antriebsvorrichtung (13) erzeugt wird.

2. Verfahren nach Anspruch 1, **dadurch gekennzeichnet, dass** der Schritt des Ausfluchtens Folgendes beinhaltet:

   - einen Schritt des Berechnens von Drehimpuls-Sollwerten $H_x$, $H_y$ und $H_z$ der Drehimpuls-Speichervorrichtung (15), jeweils entlang den Achsen X, Y und Z, abhängig von den Drehgeschwindigkeiten $\omega_x$, $\omega_y$ und $\omega_z$ des Raumfahrzeugs, jeweils entlang den Achsen X, Y und Z mithilfe folgender Beziehungen, wenn $\omega_z$ positiv ist:

$$H_x = K\,\omega_y$$

$$H_y = -\,K\,\omega_x$$

$$H_z = 0$$

   wobei K ein vorbestimmter Koeffizient ist; wobei dieselben Beziehungen umgesetzt werden, wenn $\omega_z$ negativ

ist, durch Austauschen des Koeffizienten K durch einen Koeffizienten K'; wobei der Koeffizient K' durch die Beziehung K' = - K bestimmt wird,
- einen Schritt des Steuerns der Drehgeschwindigkeiten der Trägheitsräder so dass das Trägheitsmoment der Trägheitsräder, welches entlang jeder der Achsen erzeugt wird, regelungstechnisch an die im vorherigen Schritt bestimmten Sollwerte $H_x$, $H_y$ und $H_z$ angebunden wird;
wobei der Schritt des Ausfluchtens fortgesetzt wird, solange die Drehgeschwindigkeiten des Raumfahrzeugs entlang den beiden Achsen X und Y einen bestimmten Schwellenwert überschreiten.

3. Verfahren nach Anspruch 2, **dadurch gekennzeichnet, dass** der Koeffizient K abhängig von Anfangsbedingungen des Raumfahrzeugs bestimmt wird, welche beim Start des Verfahrens definiert wurden.

4. Verfahren nach den Ansprüchen 2 oder 3, **dadurch gekennzeichnet, dass** der Schritt des Ausfluchtens einen Schritt beinhaltet, welcher darin besteht, die regelungstechnische Anbindung des Drehimpulses der Drehimpuls-Speichervorrichtung (15) aufzuschieben, wenn $\omega_z$ positiv ist oder wenn $\omega_z$ negativ ist; wodurch es ermöglicht wird, eine Richtung des Momentes der Achse Z zu garantieren, welche für den Schritt des Reduzierens des Drehimpulses des Raumfahrzeugs notwendig ist.

5. Verfahren nach einem der vorhergehenden Ansprüche, **dadurch gekennzeichnet, dass** der Schritt des Reduzierens des Drehimpulses aufeinanderfolgende Schritte beinhaltet:

- des Speicherns des Drehimpulses entlang der Achse Z durch die Drehimpuls-Speichervorrichtung (15), welcher aus einer Sequenz von durch die Antriebsvorrichtung (13) abgegebenen Schüben resultiert; wobei das Moment der Achse Z, welches durch die Sequenz von Schüben erzeugt wird, mit gegenteiligem Vorzeichen zur Drehgeschwindigkeit des Raumfahrzeugs entlang der Achse Z, durch die Drehimpuls-Speichervorrichtung (15) so absorbiert wird, dass eine konstante Drehgeschwindigkeit ($\omega_z$) des Raumfahrzeugs entlang der Achse Z gehalten wird,
- des Abgebens des Drehimpulses, welcher darin besteht, den Drehimpuls des Raumfahrzeugs durch Übertragung des durch die Drehimpuls-Speichervorrichtung (15) gespeicherten Drehimpulses an das Raumfahrzeug zu reduzieren,
wobei der Schritt des Speicherns des Drehimpulses, welcher für eine konstante Drehgeschwindigkeit des Raumfahrzeugs erfolgt, es ermöglicht, unerwünschte Geschwindigkeits-Inkremente, die mit den durch die Antriebsvorrichtung (13) abgegebenen Schüben einhergehen, zu begrenzen.

6. Verfahren nach Anspruch 5, **dadurch gekennzeichnet, dass** die Sequenz von Schüben eine Mehrzahl nacheinander im Zuge einer oder mehrerer Umdrehungen des Raumfahrzeugs um die Achse Z abgegebener Schübe beinhaltet; wobei die Sequenz von Schüben konfiguriert ist, um die mit jedem Schub einhergehenden Geschwindigkeits-Inkremente zu kompensieren.

7. Verfahren nach den Ansprüchen 6 oder 7, **dadurch gekennzeichnet, dass** der Schritt des Speicherns des Drehimpulses unterbrochen wird, wenn der Drehimpuls entlang der Achse Z der Drehimpuls-Speichervorrichtung (15) einen vorbestimmten Höchstwert erreicht; wobei die aufeinanderfolgenden Schritte des Speicherns und der Abgabe des Drehimpulses mehrmals wiederholt werden, bis der Drehimpuls des Raumfahrzeugs entlang der Achse Z einen vorbestimmten Schwellenwert unterschreitet.

8. Verfahren nach einem der vorhergehenden Ansprüche, **dadurch gekennzeichnet, dass** der Schritt des Reduzierens des Drehimpulses unterbrochen wird, wenn der Drehimpuls des Raumfahrzeugs entlang der Achse Z einen vorbestimmten Schwellenwert unterschreitet.

9. Verfahren nach einem der vorhergehenden Ansprüche, **dadurch gekennzeichnet, dass** es einen Schritt beinhaltet, welcher darin besteht, den Drehimpuls des Raumfahrzeugs mithilfe der Drehimpuls-Speichervorrichtung (15) zu annullieren, wenn der Drehimpuls des Raumfahrzeugs einen vorbestimmten Schwellenwert unterschreitet.

10. Verfahren nach einem der vorhergehenden Ansprüche, **dadurch gekennzeichnet, dass** es einen Schritt beinhaltet, welcher darin besteht, die Position der Sonne mithilfe der Gruppe von Sensoren (12) zu erkennen und das Raumfahrzeug in Bezug auf die Sonne mithilfe der Drehmoment-Speichervorrichtung (15) auszurichten.

11. System zur Steuerung der Fluglage und der Umlaufbahn, beinhaltend ein Steuerungsmodul, welches Codeanweisungen enthält, welche dazu dienen, das Verfahren nach einem der Ansprüche 1 bis 10 umzusetzen.

**12.** Satellit mit terrestrischer Umlaufbahn, versehen mit einem System zur Steuerung der Fluglage und der Umlaufbahn nach Anspruch 11.

**Claims**

1. Method for reducing the angular momentum of a spacecraft, said spacecraft comprising:

   - a propulsion device (13) able to generate a torque of modulatable amplitude along a Z axis, said Z axis corresponding substantially to an axis of maximum inertia or minimum inertia of the spacecraft, an X axis and a Y axis forming with Z a direct orthogonal frame attached to the spacecraft;
   - an angular momentum accumulating device (15), able to generate and control, via control of the angular velocities of flywheels belonging to the angular momentum accumulating device, an angular momentum and a torque along the X, Y and Z axes;
   - a set of sensors (12) able to measure the angular velocities ($\omega_x$, $\omega_y$, $\omega_z$) of the spacecraft along the X, Y and Z axes, and to deliver an estimation of the angular momentum (h) of the spacecraft;

   wherein said method comprises:

   - a first step of aligning the angular momentum of the spacecraft along the Z axis, consisting in slaving the angular momentum, along the X axis and the Y axis, respectively, of the angular momentum accumulating device (15), to the angular velocity of the spacecraft, along the Y axis and the X axis, respectively, creating gyroscopic torques that tend to reduce the angular velocities of the spacecraft along the X and Y axes;

   **characterized in that** the method further comprises:

   - a second step of reducing the angular momentum of the spacecraft by means of a Z-axis torque generated by the propulsion device (13).

2. Method according to Claim 1, **characterized in that** the alignment step comprises:

   - a step of calculating angular momentum setpoints $H_x$, $H_y$ and $H_z$ for the angular momentum accumulating device (15) along the X, Y and Z axes, respectively, depending on the angular velocities $\omega_x$, $\omega_y$ and $\omega_z$ of the spacecraft along the X, Y and Z axes, respectively, by means of the following relationships, when $\omega_z$ is positive:

$$H_x = K\ \omega_y$$

$$H_y = -K\ \omega_x$$

$$H_z = 0$$

   in which K is a preset coefficient; the same relationships being employed when $\omega_z$ is negative by replacing the coefficient K with a coefficient K'; said coefficient K' being given by the relationship K' = -K;
   - a step of controlling the angular velocities of the flywheels so as to set the angular momentum of the flywheels generated along each of the axes to the setpoint values $H_x$, $H_y$ and $H_z$ determined in the preceding step, the alignment step continuing as long as the angular velocities of the spacecraft along the two X and Y axes are higher than a preset threshold.

3. Method according to Claim 2, **characterized in that** the coefficient K is set depending on the initial conditions of the spacecraft, defined when said method is started.

4. Method according to Claim 2 or 3, **characterized in that** the alignment step comprises a step consisting in suspending the slaving of the angular momentum of the angular momentum accumulating device (15) when $\omega_z$ is positive or when $\omega_z$ is negative, making it possible to guarantee a direction for the Z-axis torque required for the step of reducing the angular momentum of the spacecraft.

5. Method according to any of the preceding Claims, **characterized in that** the step of reducing the angular momentum comprises in succession steps of:

- accumulating, along the Z axis, using the angular momentum accumulating device (15), angular momentum resulting from a sequence of thrusts delivered by the propulsion device (13); the Z-axis torque generated by the thrust sequence, of opposite sign to the angular velocity of the spacecraft along the Z axis, being absorbed by the angular momentum accumulating device (15) so as to keep a constant angular velocity ($\omega_z$) of the spacecraft along the Z axis;
- redistributing angular momentum, consisting in reducing the angular momentum of the spacecraft by transferring the angular momentum accumulated by the angular momentum accumulating device (15) to the spacecraft,

the step of accumulating angular momentum, implemented for a constant spacecraft angular velocity, allowing undesirable velocity increments inherent to the thrusts delivered by the propulsion device (13) to be limited.

6. Method according to Claim 5, **characterized in that** the sequence of thrusts comprises a plurality of thrusts delivered in succession during one or more revolutions of the spacecraft about the Z axis; the sequence of thrusts being configured in order to compensate for the velocity increments inherent to each of the thrusts.

7. Method according to Claim 6 or 7, **characterized in that** the angular momentum accumulating step is stopped when the angular momentum along the Z axis of the angular momentum accumulating device (15) reaches a preset maximum value; the successive steps of accumulating and redistributing angular momentum being repeated a number of times until the angular momentum of the spacecraft along the Z axis is lower than a preset threshold.

8. Method according to any of the preceding Claims, **characterized in that** the step of reducing angular momentum is stopped when the angular momentum of the spacecraft along the Z axis is lower than a preset threshold.

9. Method according to any of the preceding Claims, **characterized in that** it comprises a step consisting in cancelling out the angular momentum of the spacecraft by means of the angular momentum accumulating device (15) when the angular momentum of the spacecraft is lower than a preset threshold.

10. Method according to any of the preceding Claims, **characterized in that** it comprises a step consisting in detecting the position of the sun by means of the set of sensors (12), and in orienting the spacecraft relative to the sun by means of the angular momentum accumulating device (15).

11. Attitude and orbit control system comprising a control module containing code instructions allowing the method according to Claim 1 to 10 to be implemented.

12. Earth-orbiting satellite equipped with an attitude and orbit control system according to Claim 11.

FIG.1

FIG.2

FIG.3a

FIG.3b

FIG.4a

FIG.4b

FIG.4c

**Initialisation**
Estimation hini — 100

**Calcul du gain K** — 101

**Calcul des consignes Hx, Hy et Hz
des roues inertielles**
Si $\omega z > 0$ : Hx = K $\omega$y ; Hy = - K $\omega$x ; Hz = 0
Si $\omega z < 0$ : K' = -K — 102

**Pilotage des roues inertielles**
sur les consignes Hx, Hy, Hz — 103

$\omega$x < Seuil A
$\omega$y < Seuil A'
NON — OUI

1ère étape :
Alignement de h
selon l'axe Z
( par les roues)

**Définition d'une séquence
de poussées** — 104

**Accumulation de Hz par roues inertielles**
( par réalisation de la séquence de poussées) — 105

**Restitution de Hz des roues inertielles
pour réduction moment cinétique hz** — 106

h < Seuil B
NON — OUI

2ème étape :
Réduction de hz
(via le propulseur)

**Stabilisation de l'attitude**
(transfert Hz dans les roues) — 107

FIG.5

```
┌─────────────────────────────┐
│  Alignement du moment       │      200
│  cinétique selon Z          │ ∿
└─────────────────────────────┘
                │
┌─────────────────────────────┐
│  Réduction du moment        │      201
│  cinétique Hz               │ ∿
└─────────────────────────────┘
                │
┌─────────────────────────────┐
│                             │      202
│  Acquisition soleil         │ ∿
└─────────────────────────────┘
                │
┌─────────────────────────────┐
│                             │      203
│  Réorientation satellite    │ ∿
└─────────────────────────────┘
                │
                ▼
┌─────────────────────────────┐
│                             │      204
│  Mode « Barbecue »          │ ∿
└─────────────────────────────┘
```

# FIG.6

**EP 2 690 020 B1**